# EUROPÄISCHE PATENTSCHRIFT

(11) **EP 1 407 428 B1**
(45) Veröffentlichungstag und Bekanntmachung des Hinweises auf die Patenterteilung: **02.04.2008**
(21) Anmeldenummer: 02787102.9
(22) Anmeldetag: 19.06.2002
(51) Int. Cl.: G07F 7/00

(54) **VERTRIEBSANLAGE FÜR WAREN**
DISTRIBUTION SYSTEM FOR GOODS
INSTALLATION DE DISTRIBUTION POUR DES MARCHANDISES

(30) Priorität: 13.07.2001 AT 10932001
(43) Veröffentlichungstag der Anmeldung: 14.04.2004
(73) Patentinhaber: Vormair, Anton, 4710 Grieskirchen (AT); Unger, Roland, 7412 Wolfau Nr. 490 (AT)
(72) Erfinder: Vormair, Anton, 4710 Grieskirchen (AT); Unger, Roland, 7412 Wolfau Nr. 490 (AT)
(74) Vertreter: Hübscher, Helmut
(86) Internationale Anmeldenummer: PCT/AT2002/000177
(87) Internationale Veröffentlichungsnummer: WO 2003/009244

(56) Entgegenhaltungen:
- EP-A- 0 396 139
- WO-A-01/31593
- WO-A-01/31827
- US-A- 6 105 014

## Beschreibung

Die Erfindung bezieht sich auf eine Vertriebsanlage für Waren mit Verteilerstationen, die über eine Steuereinheit betätigbare Schließfächer zur Warenaufnahme und eine mit der Steuereinheit verbundene, an eine Eingabe- und Anzeigeeinrichtung sowie an Speicher für Empfänger- und Berechtigungscodes angeschlossene Rechnereinheit aufweisen.

Um bestellte Waren unabhängig von Öffnungszeiten abholen zu können, sind Verkaufssysteme bekannt (EP 0 396 139 A1, EP 0 531 942 A2), die Verteilerstationen mit Schließfächern umfassen, in die die bestellten Waren vom Händler eingelagert und dann von einem Kunden vorzugsweise unter eine bargeldlosen Zahlungsabwicklung abgeholt werden. Zu diesem Zweck sind die Schließfächer über eine Steuereinheit von einer Rechnereinheit her betätigbar, die einerseits die Händlerberechtigung zum Zugriff auf freie Schließfächer anhand abgespeicherter Berechtigungscodes und anderseits die Zugriffsberechtigung eines Warenempfängers für in einem Schließfach gelagerte Waren anhand eines abgespeicherten Empfängercodes überprüft. Zur Erfüllung einer Bestellung, die beispielsweise über eine Eingabe- und Anzeigeeinrichtung der Rechnereinheit einer solchen Verteilerstation aufgegeben werden kann, wenn die jeweiligen Händler an diese Rechnereinheit angeschlossen sind, wird dem sich über die Eingabe-und Anzeigeeinrichtung anmeldenden Händler ein freies Schließfach für die angelieferten Waren zugeordnet, und zwar mit der Aufforderung die für die Abholung der Waren erforderlichen Daten, wie Empfängercode und Preis einzugeben. Aufgrund dieser Dateneingabe wird das zugeordnete Schließfach geöffnet, so daß die bestellte Ware in das Schließfach eingelagert werden kann. Zum Abholen der Ware wird der Empfänger zur Eingabe des Empfängercodes und der für den bargeldlosen Zahlungsverkehr erforderlichen Daten aufgefordert, bevor das dem eingegebenen Empfängercode zugeordnete Schließfach zusammen mit dem Warenpreis angezeigt wird. Über eine empfängerseitige Bestätigung wird dann das angezeigte Schließfach mittels der Steuereinheit geöffnet, um die bezahlte Ware entnehmen zu können. Diese bekannten Verkaufssysteme können allerdings nur in örtlich begrenzten Bereichen eingesetzt werden, weil den Benützern jeweils nur eine Verteilerstation zur Verfügung steht.

Um die Verfügbarkeit von Speicherplätzen einer Verteilerstation anzuzeigen, ist es darüber hinaus bereits bekannt (WO 01/31827 A2), die Speicherplätze der Verteilerstationen einer Vertriebsanlage zentral zu überwachen. Da die über ein Netzwerk bestellten Waren durch einen Spediteur in die jeweilige Verteilerstation eingelagert werden und der Warenempfänger die bestellte Ware lediglich der Verteilerstation entnehmen oder zurücksenden kann, ergeben sich wiederum entsprechende Benutzungsbeschränkungen.

Der Erfindung liegt somit die Aufgabe zugrunde, eine Vertriebsanlage für Waren mit voneinander örtlich getrennten Verteilerstationen zu schaffen, zwischen denen Waren unterschiedlicher Absender an verschiedene Empfänger verschickt werden können, und zwar ohne Benutzungseinschränkungen.

Ausgehend von einer Vertriebsanlage der eingangs geschilderten Art löst die Erfindung die gestellte Aufgabe dadurch, daß den miteinander verbundenen Rechnereinheiten der einzelnen voneinander örtlich getrennten Verteilerstationen einerseits je ein Drucker für maschinenlesbare Empfängeradressen aus einem über die Eingabe- und Anzeigeeinrichtung ladbaren Adressenspeicher sowie eine Leseeinrichtung für solche an den Waren anbringbare Empfängeradressen und anderseits je ein Programmspeicher zum Festlegen eines Warenweges zwischen durch je eine Verteilerstation gebildeten Aufgabe- und Zielstationen in Abhängigkeit von der Empfängeradresse, dem Schließfachangebot der Verteilerstationen und von gegebenenfalls vorgesehenen Förderabschnitten zugeordnet sind, daß die Verteilerstationen eine an ihre Rechnereinheit angeschlossene Sende- und Empfangseinheit zum Anwählen wenigstens einer aufgrund des festgelegten, mehrere Verteilerstationen umfassenden Warenweges aus abgespeicherten Adressen ausgewählten Adresse eines berechtigten Spediteurs für den Warentransport oder der Empfängeradresse umfassen, daß die Rechnereinheiten der Verteilerstationen mit Codegebern für in freie Schließfächer einzulagernde Waren versehen sind, welche Codegeber bei der Einlagerung einer Ware in ein freies Schließfach einen Code erstellen, der der eingelagerten Ware zugeordnet wird, wobei der Auftrag und der erstellte Code auf getrennten Übertragungswegen dem berechtigten Spediteur mitgeteilt werden und wobei die Schließfächer mit den eingelagerten Waren nach der Eingabe des Codes der Verteilerstation, in dem sich das jeweilige Schließfach befindet, und des Codes der vorherigen Verteilerstation auf dem definierten Warenweg über die entsprechende Eingabe- und Anzeigeeinrichtung der Verteilerstation geöffnet werden.

Mit der durch diese Maßnahmen gegebenen Vernetzung der einzelnen Verteilerstationen kann unter Einbeziehung von Spediteuren für den Warentransport eine vorteilhafte, allen Anforderungen genügende Vertriebsanlage bereitgestellt werden, die weitgehend uneingeschränkt für einen Warenverkehr genutzt werden kann. Zu diesem Zweck wird beim Aufgeben einer Ware in einer Verteilerstation die Angabe aller für den Warenversand erforderlichen Daten, insbesondere die Empfängeradresse, gefordert, bevor ein freies Schließfach angezeigt und zur Wareneingabe geöffnet wird. Über einen in jeder Verteilerstation vorgesehenen Drucker werden die für den Warenverkehr erforderlichen Daten, zumindest aber die Empfängeradresse, in einer maschinenlesbaren Art, vorzugsweise auf Aufklebern ausgegeben, die auf der Ware anzubringen sind. Nach dem Ausdrucken eines Aufgabebeleges kann der Aufgabevorgang als abgeschlossen betrachtet werden.

Über einen Programmspeicher zum Festlegen eines Warenweges zwischen einer Aufgabe- und einer Zielstation wird der jeweilige Warenweg in Abhängigkeit von der eingegebenen Empfängeradresse festgelegt, wobei nicht nur das Schließfachangebot in den einzelnen Verteilerstationen, sondern auch allenfalls vorgegebene, einzelnen Spediteuren zugeordnete Förderabschnitte berücksichtigt werden können. Mit der Festlegung des jeweiligen Warenweges wird in der Zielstation oder einer gegebenenfalls vorgesehenen Zwischenstation ein freies Schließfach reserviert, so daß eine Überfüllung einer Verteilerstation ausgeschlossen werden kann. Außerdem werden die für den festgelegten Warenweg vorgesehenen Spediteure über eine an die Rechnereinheit angeschlossene Sende- und Empfangseinheit vom Bereitliegen einer zu transportierenden Ware verständigt, die somit von einem den Transportauftrag übernehmenden Spediteur abgeholt werden kann. Anhand seines Berechtigungscodes überprüft die Rechnereinheit in der Aufgabestation, ob für den Spediteur eine Ware reserviert ist, und veranlaßt die Anzeige des jeweiligen Schließfaches und seine Öffnung. Der Spediteur entnimmt die Ware dem Schließfach und veranlaßt ein neuerliches Ausdrucken der maschinenlesbaren Empfängeradresse für den Fall, daß an der zu übernehmenden Ware keine Empfängeradresse angebracht worden ist. Mit dem Schließen des geöffneten Schließfaches kann eine Obernahmebestätigung für den Spediteur ausgedruckt werden. Der Spediteur, dem die Zielstation bzw. die Zwischenstation, an die die Ware zu liefern ist, über die Sende- und Empfangseinheit mitgeteilt wurde, transportiert nunmehr die Ware zur angegebenen Ziel- bzw. Zwischenstation, wo er die Empfängeradresse auf der Ware über eine Leseeinrichtung eingibt, nachdem er seine Berechtigung über den Berechtigungscode nachgewiesen hat. Aufgrund der eingelesenen Empfängeradresse wird das für die Ware reservierte Schließfach angezeigt und geöffnet, um die Ware aufzunehmen. Die durch das Schließen des Schließfaches abgeschlossene Warenübernahme bewirkt die Ansteuerung der Sende- und Empfangseinheit über die Rechnereinheit, wobei im Falle der Einlagerung in eine Zwischenstation die für den nächsten Förderabschnitt zuständigen Spediteure verständigt werden, um in der bereits beschriebenen Art für den Weitertransport der Ware zu sorgen. In der Zielstation wird jedoch der Empfänger aufgrund der vom Absender eingegebenen Empfängeradresse angewählt und davon unterrichtet, daß für ihn eine Ware zum Abholen bereitliege. Mit Hilfe eines entsprechenden Empfängercodes, der auch mit der Nachricht übermittelt werden kann, kann dann die Ware aus der angegebenen Verteilerstation abgeholt werden. Da alle Verteilerstationen der Vertriebsanlage in gleicher Weise aufgebaut sind, wird eine hohe Funktionssicherheit für die Vertriebsanlage erreicht, weil selbst beim Ausfall einer Vertriebsstation die Vertriebsanlage über die übrigen Verteilerstationen weiter benützt werden kann.

Um eine aufgegebene Ware nicht nur anhand der Empfängeradresse identifizieren zu können, ist für eine zusätzliche Kennung der Ware gesorgt, indem die Rechnereinheiten der einzelnen Verteilerstationen mit Codegebern für in freie Schließfächer einzulagernde Waren versehen werden und die Sende- und Empfangseinheiten zumindest die den Waren in der jeweiligen Verteilerstation zugeordneten Codes den angewählten Spediteuren und/oder Empfängern übermitteln, so daß der Zugriff auf die in eine Verteilerstation eingelagerten Waren nur mit einem Code möglich ist, der erst beim Einlagern der Waren in diese Verteilerstation erstellt wird. Ein solcher Code kann in einfacher Weise, beispielsweise aus der Adresse der Verteilerstation, der Nummer des benützten Schließfaches sowie der Uhrzeit der Einlagerung der Waren, erstellt werden. Bildet dabei der vom Codegeber der Aufgabestation einer Ware ausgegebene Code eine Warenkennung für alle Verteilerstationen, so kann anhand dieses Codes der Warenweg vorteilhaft verfolgt werden. Außerdem kann bei einer getrennten Übermittlung der von der Aufgabestation und von der Zielstation erstellten Codes an die Empfängeradresse eine mißbräuchliche Warenentnahme mit großer Wahrscheinlichkeit ausgeschlossen werden.

In der Zeichnung ist der Erfindungsgegenstand beispielsweise dargestellt. Es zeigen
- Fig. 1: eine Verteilerstation einer erfindungsgemäßen Vertriebsanlage für Waren in einem schematischen Blockschaltbild und
- Fig. 2: ein Blockschaltbild einer aus solchen Verteilerstationen aufgebauten Vertriebsanlage.

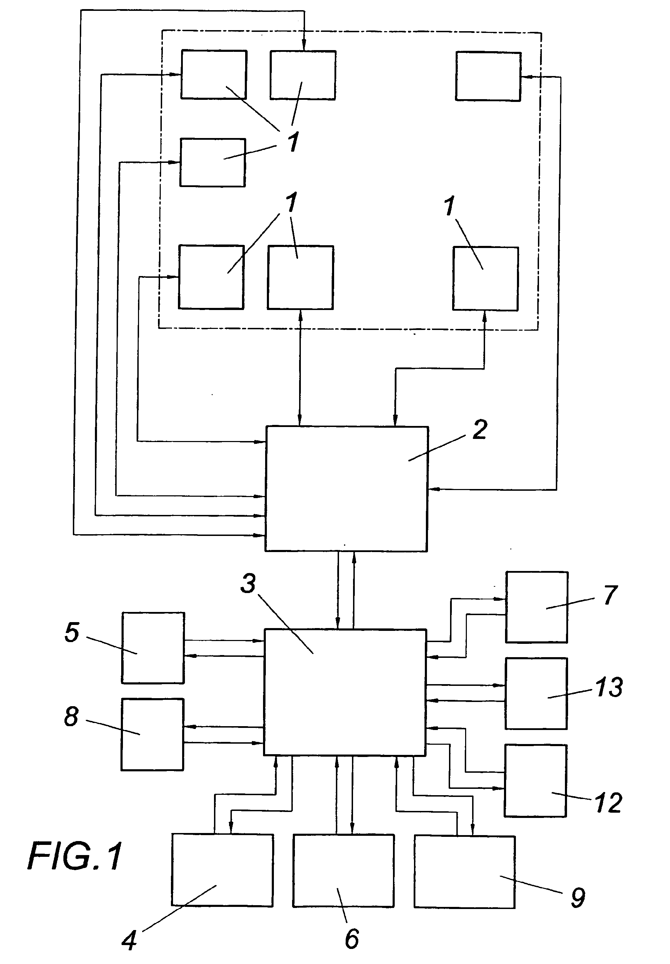

Gemäß der Fig. 1 werden die Schließfächer 1 einer Verteilerstation über eine gemeinsame Steuereinheit 2 angesteuert, die mit einer übergeordneten Rechnereinheit 3 verbunden ist. Diese Rechnereinheit 3 kann über eine Eingabe- und Anzeigeeinrichtung 4 betätigt werden, um beispielsweise eine Ware für einen bestimmten Empfänger aufzugeben. Zu diesem Zweck sind die für den Warenversand erforderlichen Daten einzugeben. Neben der Empfängeradresse werden dies vor allem Daten über den Absender, die Versandart und die Zahlungsmodalitäten sein. Aufgrund der eingegebenen Daten wird ein freies, für die ausgewählte Versandart geeignetes Schließfach 1 ausgewählt und angezeigt Außerdem wird die eingegebene Empfängeradresse in einem Adressenspeicher 5 abgelegt, aus dem sie zum Ausdrucken in einer maschinenlesbaren Form an einen Drukker 6 über die Rechnereinheit 3 ausgegeben wird. Der Drucker 6 stellt somit einen Aufkleber mit einer maschinenlesbaren Empfängeradresse zum Anbringen an der Ware zur Verfügung. Zum Einlagern einer bereits mit einer maschinenlesbaren Empfängeradresse versehenen Ware ist eine Leseeinrichtung 7 für die an den Waren anbringbaren Empfängeradressen vorgesehen. Mit der Einlagerung einer Ware in ein freies Schließfach 1 wird dieser Ware ein Code zugeordnet, der in einem Codegeber 8 aus der jeweiligen Stationsadresse, der Schließfachnummer und der Uhrzeit der Wareneinlagerung erstellt wird. Dieser Code, der der Empfängeradresse zugeordnet werden kann, wird in einem Kennungsspeicher 9 verwaltet.

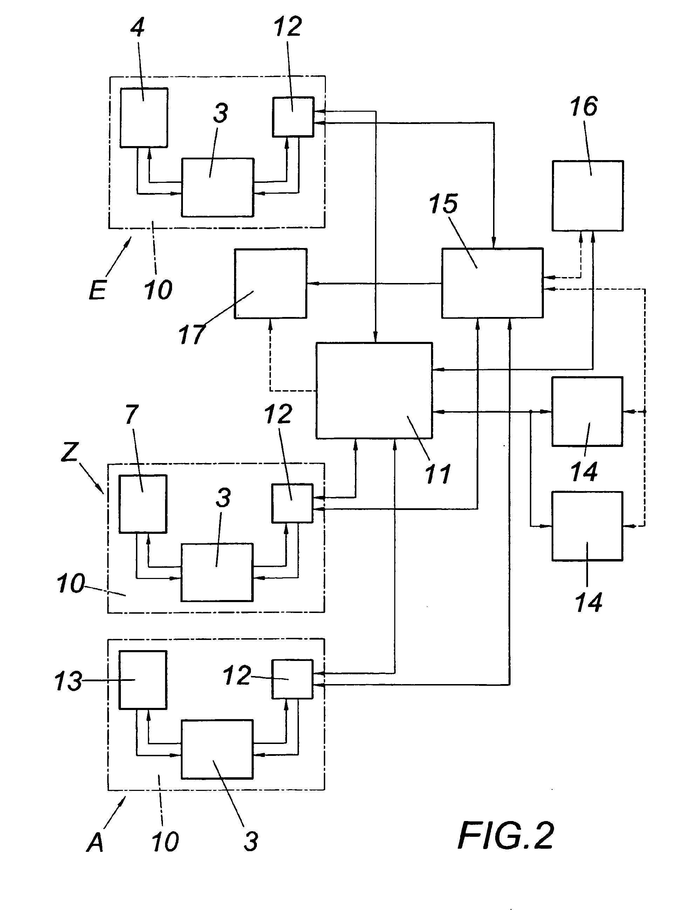

Wie der Fig. 2 entnommen werden kann, sind mehrere im wesentlichen gleich aufgebaute Verteilerstationen 10 vorgesehen, die miteinander über ein Netz 11 verbunden sind. Zu diesem Zweck sind die Rechnereinheiten 3 der Verteilerstationen 10 mit entsprechenden Sende- und Empfangseinheiten 12 ausgerüstet. Mit Hilfe eines Programmspeichers 13, kann in den einzelnen Verteilerstationen 10 aus der eingegebenen Empfängeradresse anhand der vorhandenen Verteilerstationen 10 ein Warenweg von der jeweiligen Aufgabestation zu einer Zielstation gegebenenfalls unter Benützung von Zwischenstationen festgelegt werden, wobei bei der Festlegung dieses Warenweges zwischen den einzelnen Verteilerstationen 10 das jeweilige Angebot an freien Schließfächern berücksichtigt werden kann. Der Warentransport zwischen den Verteilerstationen 10 wird über Spediteure abgewickelt, die unter Umständen nur für den Warentransport in bestimmten Förderabschnitten berechtigt sind, so daß der jeweilige Warenweg von der Aufgabestation zur Zielstation auch eine solche Aufteilung der Gesamtwege in Förderabschnitte berücksichtigen muß, indem entsprechende Zwischenstationen bestimmt werden. Das Festlegen von Zwischenstationen kann aber auch aufgrund der Versandart erforderlich werden, beispielsweise wenn eine bestimmte Temperaturführung für die zu transportierenden Waren gefordert wird. Da aufgrund der Vernetzung der einzelnen Verteilerstationen 10 die jeweilige Aufgabestation über das Verbindungsnetz 11 die für die Festlegung des Warenweges erforderlichen Informationen von der Zielstation bzw, den unter Umständen anzuwählenden Zwischenstationen abfragen kann, kann über den Programmspeicher 13 der jeweilige Warenweg festgelegt werden, um in den jeweils auf diesem Warenweg liegenden Verteilerstationen 10 ein Schließfach 1 für die Warenaufnahme zu reservieren.

Gemäß dem Ausführungsbeispiel nach der Fig. 2 wird angenommen, daß eine der Verteilerstationen 10 als Aufgabestation A dient, in der nach der entsprechenden Dateneingabe anhand der abgespeicherten Daten über den Programmspeicher 13 der Warenweg in Abhängigkeit von vorgesehenen Förderabschnitten und Schließfachangeboten festgelegt wird. Dieser Förderweg zur Zielstation E verläuft über eine Zwischenstation Z. Aufgrund des festgelegten Warenweges werden sowohl in der Zwischenstation Z als auch in der Zielstation E die für die Warenaufnahme erforderlichen Schließfächer 1 reserviert. Außerdem werden über die Sende- und Empfangseinheit 12 die Adressen von Spediteuren 14 angewählt, die für den Warentransport zwischen der Aufgabestation A und der Zwischenstation Z berechtigt sind. Die Adressen dieser Spediteure 14 sind im Adressenspeicher jeder Verteilerstation 10 abgespeichert. Zur Anwahl der Spediteure 14 kann das Netz 11 herangezogen werden, wie dies in der Fig. 2 dargestellt ist. Es ist aber auch möglich, ein getrenntes Netz 15 zur Verbindung der einzelnen Verteilerstationen 10 mit den Spediteuren 14 einzusetzen, wie dies in der Fig. 2 strichliert angedeutet wird- Bestätigt einer der angewählten Spediteure 14 die Auftragsübernahme für den Warentransport von der Aufgabestation A zur Zwischenstation Z, so wird der Auftrag für die anderen Spediteure 14 gesperrt, so daß Doppelbuchungen ausgeschlossen werden können. Mit der übermittelten Auftragsbestätigung wird den Stationen A und Z der den Auftrag übernehmende Spediteur 14 mitgeteilt, der seine Berechtigung über einen vorgegebenen Berechtigungscode nachweisen muß, der für die einzelnen Spediteure 14 in den Kennungsspeichern 9 abgespeichert ist. Der den Auftrag übernehmende Spediteur 14 holt nunmehr die Ware aus der Aufgabestation A ab, indem er über die Eingabe- und Anzeigeeinrichtung 4 seinen Berechtigungscode eingibt, wonach die Schließfächer 1 angezeigt und geöffnet werden, in denen für diesen Spediteur 14 Waren bereitliegen. Der Spediteur 14 überprüft, ob auf den Waren die maschinenlesbare Empfängeradresse ordnungsgemäß angebracht ist, und veranlaßt beim Fehlen einer solchen Empfängeradresse einen neuerlichen Ausdruck der im Adressenspeicher 5 abgelegten Empfängeradresse über den Drucker 6- Mit der Warenübernahme und dem Schließen des jeweiligen Schließfaches 1 wird über den Drucker 6 ein Übernahmebeleg für den Spediteur 14 ausgedruckt, der nunmehr die übernommenen Waren zur Zwischenstation Z transportiert, wo er sich wieder mit Hilfe seines Berechtigungscodes anmelden muß. Über die Leseeinrichtung 7 wird in der Zwischenstation Z die zu übernehmende Ware anhand der Empfängeradresse, die vorzugsweise den in der Aufgabestation A für die Ware erstellten Code umfaßt, identifiziert, um das für die jeweilige Ware reservierte Schließfach 1 anzuzeigen und zu öffnen. Mit der Einlagerung der Ware in das Schließfach und dem Schließen des Schließfaches ist der Übemahmevorgang abgeschlossen, wobei durch den Codegeber 8 der Zwischenstation Z der übernommenen Ware ein zusätzlicher Code zugeordnet wird, der für das Abholen der Ware maßgebend ist. Mit der Warenübernahme in der Zwischenstation Z wird ein für den Förderabschnitt zwischen der Zwischenstation Z und der Zielstation E zuständiger Spediteuer 16 von der Sende- und Empfangseinheit 12 der Zwischenstation Z über das Netz 11 bzw. das Netz 15 angewählt. Der angewählte Spediteur 16 holt nach der Auftragsübernahme die Ware aus der Zwischenstation Z in der bereits beschriebenen Weise ab und liefert sie an die Zielstation E, in der die Warenübernahme wie in allen vorhergehenden Verteilerstationen 10 durchgeführt wird. Zum Unterschied von der Zwischenstation Z wird jedoch der Empfänger 17 gemäß der Empfängeradresse über die Sende- und Empfangseinheit 12 der Zielstation E angewählt, beispielsweise über das Netz 15 für Funktelefone. Die Anwahl des Empfängers 17 kann selbstverständlich auch über das Netz 11 erfolgen, falls der Empfänger 17 am Netz 11 angeschlossen ist.

Der Empfänger 17, dem auf diesem Wege die Ankunft einer für ihn bestimmten Ware mitgeteilt wird, erhält mit dieser Mitteilung einen Empfängercode, der dem in der Zielstation E durch den Codegeber 8 erstellten Code entspricht. Um die Sicherheit zu erhöhen, kann dem Empfänger 17 zusätzlich der der Ware in der Aufgabestation A zugeordnete Code mitgeteilt werden, und zwar vorzugsweise auf einem getrennten Übertragungsweg, so daß das Abholen der in einem Schließfach 1 der Zielstation E gelagerten Ware nur über die Eingabe der den Waren in der Aufgabestation A und in der Zielstation E zugeordneten Codes möglich ist. Nach Eingabe des dem Empfänger 17 übermittelten Codes über die Eingabe- und Anzeigeeinrichtung 4 der Zielstation E wird dem Empfänger 17 das die Ware enthaltende Schließfach 1 angezeigt und dieses Fach geöffnet, womit die Ware aus der Vertriebsanlage ausscheidet. Es braucht wohl nicht erwähnt zu werden, daß auch im Zusammenhang mit der beschriebenen Vertriebsanlage ein bargeldloser Zahlungsverkehr in bekannter Weise verknüpft werden kann, um den Warentransport bzw. die Warenausgabe von einer ordnungsgemäßen Bezahlung der Ware abhängig zu machen.

Über die einzelnen Verteilerstationen 10 können Waren auch ohne Transport zwischen Verteilerstationen verteilt werden, wenn die Aufgabestation A zugleich Zielstation E ist, weil in diesem Fall nicht ein Spediteur, sondern der Empfänger 17 von der Aufgabestation A angewählt wird.

## Patentansprüche

1. Vertriebsanlage für Waren mit Verteilerstationen (10), die über eine Steuereinheit (2) betätigbare Schließfächer (1) zur Warenaufnahme und eine mit der Steuereinheit (2) verbundene, an eine Eingabe- und Anzeigeeinrichtung (4) sowie an Speicher (9) für Empfänger- und Berechtigungscodes angeschlossene Rechnereinheit (3) aufweisen, wobei den miteinander verbundenen Rechnereinheiten (3) der einzelnen voneinander örtlich getrennten Verteilerstationen (10) einerseits je ein Drucker (6) für maschinenlesbare Empfängeradressen aus einem über die Eingabe- und Anzeigeeinrichtung (4) ladbaren Adressenspeicher (5) sowie eine Leseeinrichtung (7) für solche an den Waren anbringbare Empfängeradressen und anderseits je ein Programmspeicher (13) zum Festlegen eines Warenweges zwischen durch je eine Verteilerstation (10) gebildeten Aufgabe- und Zielstationen (A, E) in Abhängigkeit von der Empfängeradresse, dem Schließfachangebot der Verteilerstationen (10) und von gegebenenfalls vorgesehenen Förderabschnitten zugeordnet sind, wobei die Verteilerstationen (10) eine an ihre Rechnereinheit (3) angeschlossene Sende- und Empfangseinheit (12) zum Anwählen wenigstens einer aufgrund des festgelegten, mehrere Verteilerstationen (10) umfassenden Warenweges aus abgespeicherten Adressen ausgewählten Adresse eines berechtigten Spediteurs (14) für den Warentransport oder der Empfängeradresse umfassen, wobei die Rechnereinheiten (3) der Verteilerstationen mit Codegebern (8) für in freie Schließfächer (1) einzulagernde Waren versehen sind, welche Codegeber (8) bei der Einlagerung einer Ware in ein freies Schließfach (1) einen Code erstellen, der der eingelagerten Ware zugeordnet wird, wobei der Auftrag und der erstellte Code auf getrennten Übertragungswegen dem berechtigten Spediteur (14) mitgeteilt werden und wobei die Schließfächer (1) mit den eingelagerten Waren nach der Eingabe des Codes der Verteilerstation, in dem sich das jeweilige Schließfach (1) befindet, und des Codes der vorherigen Verteilerstation auf dem definierten Warenweg über die entsprechende Eingabe- und Anzeigeeinrichtung (4) der Verteilerstation geöffnet werden.

2. Vertriebsanlage nach Anspruch 1, **dadurch gekennzeichnet, daß** der vom Codegeber (8) der Aufgabestation (A) einer Ware ausgegebene Code eine Warenkennung für alle Verteilerstationen (10) bildet.

## Claims

1. Distribution system for goods having distribution stations (10) which comprise lockers (1), which can be actuated via a control unit (2), for receiving goods and a computer unit (3) which is connected to the control unit (2), to an input and display device (4) and to a memory (9) for receiver and authorisation codes, wherein the mutually connected computer units (3) of the individual distribution stations (10), which are separated from each other in terms of location, are allocated on the one hand a respective printer (6) for machine-readable receiver addresses from an address memory (5), which can be loaded via the input and display device (4), and a reading device (7) for those receiver addresses, which can be attached to the goods, and are allocated on the other hand a program memory (13) in each case for establishing a path of the goods between dispatch and target stations (A, E), which are formed in each case by a distribution station (10), in dependence upon the receiver address, the provision of lockers of the distribution stations (10) and delivery sections provided where appropriate, wherein the distribution stations (10) comprise a transmitting and receiving unit (12), which is connected to the computer unit (3) thereof, for selecting at least one address of an authorised carrier (14) for the transportation of goods or the receiver address, said address being selected from stored addresses on the basis of the established path of goods encompassing several distribution stations (10), wherein the computer units (3) of the distribution stations are provided with encoders (8) for goods which are to be stored in free lockers (1), which encoders (8), when storing a good in a free locker (1), produce a code which is allocated to the stored good, wherein the order and the produced code are communicated to the authorised carrier (14) on separate transmission paths, and wherein the lockers (1) containing the stored goods are opened upon input of the code of the distribution station, in which the respective locker (1) is located, and upon input of the code of the previous distribution station on the defined goods path via the corresponding input and display device (4) of the distribution station.

2. Distribution system as claimed in claim 1, **characterised in that** the code output by the encoder (8) of the dispatch station (A) of a good forms a goods identifier for all distribution stations (10).

## Revendications

1. Installation de vente pour des marchandises, avec des stations de distribution (10), présentant des compartiments fermants (1), actionnables par une unité de commande (2), pour recevoir des marchandises et une unité calculatrice (3), reliée à l'unité de commande (2), raccordée à un dispositif d'introduction et d'affichage (4) ainsi qu'à une mémoire (9) pour des codes de réception et d'autorisation, à chacune des unités calculatrices (3), reliées entre elles, des différentes stations de distribution (10) séparées localement les unes des autres, étant associé respectivement une imprimante (6) pour des adresses de destinataire lisibles par machine, extraites d'une mémoire d'adresses (5) pouvant être chargée par l'intermédiaire du dispositif d'introduction et d'affichage (4), ainsi qu'un dispositif de lecture (7) pour de telles adresses de destinataire susceptibles d'être appliquées sur les marchandises, et étant d'autre part associée respectivement à chacune une mémoire de programme (13), pour fixer un chemin de marchandises entre des stations d'expédition et de destination (A, E), formées chacune par une station de distribution (10), en fonction de l'adresse de destinataire, de l'offre en compartiments fermants des stations de distribution (10), et de tronçons de transport, prévus le cas échéant,
les stations de distribution (10) comprenant une unité d'émission et de réception (12), raccordée à son unité calculatrice (3), pour sélectionner au moins une adresse, d'un expéditeur (14) autorisé pour le transport de marchandises, sélectionnée à partir d'adresses mémorisées, du fait du chemin de marchandise fixé, comprenant plusieurs stations de distribution (10), ou pour sélectionner l'adresse de destinataire,
les unités calculatrices (3) des stations de distribution étant munies de transmetteurs de code (8) pour des marchandises à emmagasiner dans des compartiments fermants (1) libres, les transmetteurs de code (8), lors de la mise en stock d'une marchandise dans un compartiment fermant (1) libre, établissant un code associé à la marchandise introduite en magasin, l'ordre et le code établi étant communiqués à l'expéditeur (14) autorisé sur des voies de transmission séparées, et
les compartiments fermants (1), garnis des marchandises emmagasinées, étant ouverts après introduction, par l'intermédiaire du dispositif d'introduction et d'affichage (4) correspondant de la station de distribution, du code de la station de distribution dans laquelle se trouve le compartiment fermant (1) respectif, et du code de la station de distribution précédente sur le chemin de marchandise défini.

2. Installation de vente selon la revendication 1, **caractérisée en ce que** le code, fourni par le transmetteur de code (8) de la station d'expédition (A) d'une marchandise, forme une identification de marchandise pour toutes les stations de distribution (10).
